Europäisches Patentamt

European Patent Office

Office européen des brevets

(11) Publication number: **0 487 811 A1**

# EUROPEAN PATENT APPLICATION

(21) Application number: **90870236.8**

(22) Date of filing: **29.11.90**

(51) Int. Cl.5: **H04Q 11/04**, H04M 3/54

(43) Date of publication of application:
**03.06.92 Bulletin 92/23**

(84) Designated Contracting States:
**AT BE CH DE DK ES FR GB GR IT LI LU NL SE**

(71) Applicant: **BELL TELEPHONE MANUFACTURING COMPANY Naamloze Vennootschap**
**Francis Wellesplein 1**
**B-2018 Antwerp(BE)**

(72) Inventor: **Hellemans, Patrick Maria Jozef**
**Salvialaan 28**
**B-2240 Viersel(BE)**
Inventor: **Verstraete, Rik Achiel**
**Lode Van Berckenlaan 164**
**B-2600 Berchem(BE)**
Inventor: **Decuypere, Hubert Jerôme Martin**
**August de Boeckstraat 9**
**B-9120 Beveren(BE)**

(74) Representative: **Vermeersch, Robert et al**
**BELL TELEPHONE MANUFACTURING COMPANY Naamloze Vennootschap Patent Department Francis Wellesplein 1**
**B-2018 Antwerpen(BE)**

(54) **Digital telecommunication system with intelligent user terminals.**

(57) An Asynchronous Transfert Mode (ATM) digital telecommunication system including a Broadband Integrated Services Digital Network (B-ISDN, DSN), a plurality of intelligent user terminals (IT1-4) coupled thereto and control means (TCSI, TCAI) for performing basic and enhanced operations. The basic operations consist of establishing/ releasing a plurality of user connections for transmitting either user information or control information between the terminals, whilst the enhanced operations concern user facilities which are controlled by dedicated control means (TCAI) exclusively located in these terminals.

Enhanced operations such as "remote execution" which consists of using by a terminal (IT1) dedicated control means located in another terminal (IT2) and "call forward" which consists of rerouting a call from a calling terminal (IT1) to a second terminal (IT2) towards a third terminal (IT3) are disclosed as well as a method for performing this call forward.

The present invention relates to a digital telecommunication system including a digital switching network, a plurality of user terminals coupled to said switching network, and control means for performing basic and enhanced operations, said basic operations consisting of establishing and releasing user data connections between said user terminals and said enhanced operations being different from said basic operations.

Such a digital telecommunication system is generally known in the art. The control means thereof are exclusively located in the switching network and the enhanced operations performed by them concern user facilities making the telecommunication system more user friendly.

A problem with such a known system is that the complexity of the switching network increases and the management thereof becomes more difficult when the enhanced operations to be performed increase both in number and complexity, bearing in mind that in this case also the interaction between the basic and the enhanced operations becomes more sophisticated. It is clear that adding new user facilities to the switching network, i.e. increasing the number of enhanced operations, or modifying existing ones also gives rise to problems. If instead one would try to avoid this by providing a switching network able to perform from the start all possible enhanced operations for all the users, then this network would be overdimensioned.

An object of the present invention is to provide a telecommunication system of the above known type but which, without needing a too complex switching network, contains the control means for performing all the enhanced operations corresponding to the facilities requested by the users or wherein the switching network does not become more complex or more difficult to manage when these control means are modified, e.g. by adding new or by updating existing enhanced operations.

According to the invention, this object is achieved due to the fact that said enhanced operations are controlled by dedicated control means exclusively located in said user terminals.

By putting the dedicated control means in the terminals, not only they do not make the switching network more complex but also all changes in these control means have no effect on this network and more particularly on the management thereof.

Since the enhanced operations and thus also the user facilities are now exclusively associated with each terminal and provided by the dedicated control means thereof, each user can have a personalized terminal with the facilities he needs. If the user wants additional facilities, only the dedicated control means of his terminal needs to be adapted without the switching network having to be modified.

The dedicated control means may be modified by the user himself who has access thereto, e.g. via a personal computer connected to his terminal.

Another characteristic feature of the present invention is that said basic operations consist of establishing/ releasing a plurality of said user data connections between at least two of said user terminals, and that said user data connections transmit either user information or control information between said user terminals.

Still another characteristic feature of the present invention is that at least one of said user data connections is used to transfer said user information, whilst at least another one of said user data connections is used to transfer said control information between said user terminals, and that said user data connections link dedicated control means of a first user terminal with dedicated control means of a second user terminal.

This allows the dedicated control means of these terminals to communicate with each other by exchanging control information through user data connections of the switching network. This control information is not used by the switching network.

Also another characteristic feature of the invention is that said digital switching network is a Broadband Integrated Services Digital Network (B-ISDN), and that said user data connections transmit data according to the Asynchronous Transfer Mode (ATM) switching technique.

One of said enhanced operations is a remote execution operation which consists in that fact that a first terminal uses dedicated control means located in a second terminal, each of said first and second terminals including a remote execution dedicated control means for performing said remote execution operation.

This allows to reduce the cost of a user terminal, this cost being function of the number of dedicated control means installed therein. By installing only the remote execution dedicated control means in his terminal the user is able to rent and use any other dedicated control means located in one or more other terminals. It is indeed generally known that the renting of dedicated control means, e.g. which are not often used, come cheaper than buying these dedicated control means and installing them in the user's own terminal.

The present invention also relates to a method for performing an enhanced operation which is a call forward operation and which consists of rerouting a call from a calling terminal to a second terminal towards a third terminal, each of said calling and second terminals including a call forward dedicated control means for performing said call forward operation.

Such a call forward operation already exists in known telecommunication systems where call forward control means form part of the control means located in the switching network thereof. The management of such a switching network is very complex because it is in charge of handling all the call forward facilities activated by all the users of the telecommunication system.

Another object of the present invention is to simplify the complexity of this existing switching network.

According to the invention, this other object is achieved due to the fact that said method includes:

- a first step of activating in said second terminal first call forward control means for indicating to any incoming call that the latter has to be rerouted to said third terminal;
- a second step of handling each call arriving in said second terminal by said first call forward control means which activates second call forward control means in said calling terminal and transfers references of said third terminal thereto; and
- a third step of calling said third terminal by said second call forward control means.

In this way, because the first and the second call forward control means are both activated in the terminals, the switching network is no longer involved in the call forward operation and the management of this network may remain relatively simple.

Another drawback of the call forward operation known from the existing telecommunication system is that a call from the calling terminal never really reaches the second terminal but is immediately rerouted to the third terminal by the switching network. The user of the calling terminal is thus connected to the third terminal although he had called the second terminal.

Another object of the present invention is to avoid that the call of the user of the calling terminal reaches the third terminal against the will of this user.

According to the invention, this other object is achieved due to the fact that said second call forward control means informs the user of said calling terminal of the rerouting and provides said references to said user, and that said third step is executed upon authorization of said user of said calling terminal.

When the references, e.g. the name, the number and/or the location, of the third terminal are known by the user of the calling terminal, this user is free either to accept (authorize) the rerouting to the third terminal as proposed by the second terminal or to cancel his call.

Another characteristic feature of the present method is that another said first call forward control means may be activated in said third terminal in order to further reroute said call from said calling terminal towards a fourth terminal.

It is thus possible to have a cascade of rerouting terminals.

Still another characteristic feature of the present method is that said second call forward control means keeps a history table of said references given by the first call forward control means of the rerouting terminals associated with a same call in order to detect routing loops.

In case of a cascade of rerouting terminals, a routing loop appears when the references given by a rerouting terminal are the same than those given by another rerouting terminal associated to the same call. Such a routing loop can be detected by checking whether the references given by a rerouting terminal are already stored in the history table.

The above mentioned and other objects and features of the invention will become more apparent and the invention itself will be best understood by referring to the following description of an embodiment taken in conjunction with the accompanying drawings wherein:

Fig. 1 shows a digital telecommunication system according to the invention and including a digital switching network DSN and intelligent user terminals IT1-1T4;

Fig. 2 represents the physical configuration of the intelligent user terminal IT1 of Fig. 1; and

Fig. 3 shows the functional configuration of the processor means CP used in this intelligent user terminal IT1.

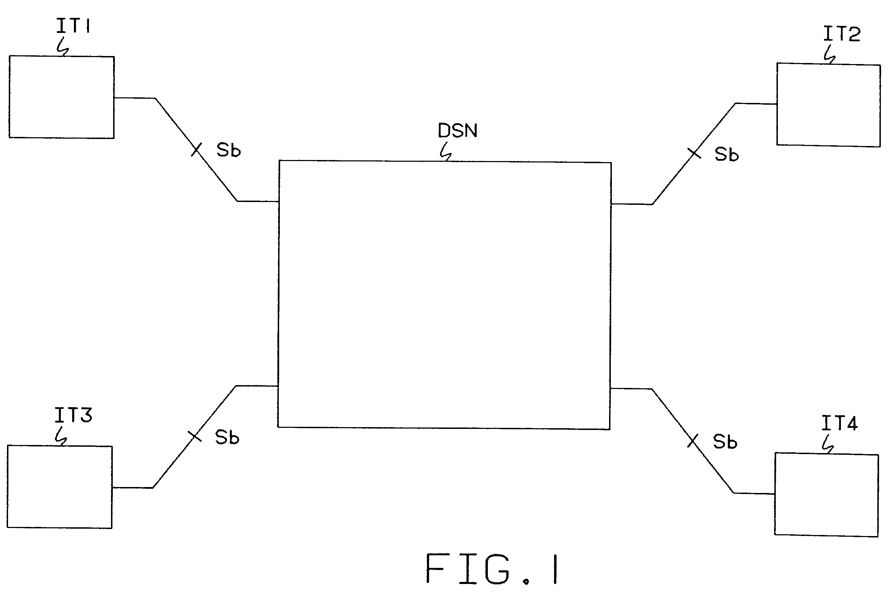

The digital telecommunication system shown in Fig. 1 includes a digital switching network DSN of the Broadband Integrated Services Digital Network (B-ISDN) type using the Asynchronous Transfer Mode (ATM) switching technique and to which "intelligent" user terminals IT1 to IT4 are connected via respective Broadband (ATM) S interfaces, also called Sb interfaces, according to the CCITT recommendations.

An Sb interface includes a number of virtual circuits or connections having the same or different bandwidths and able to exist simultaneously between a terminal IT1/4 and the switching network DSN. The total bandwidth available on an Sb interface in both directions is for instance equal to 600 Mb/sec. These connections carry either signalling data between a terminal IT1/4 and the switching network DSN in case they belong to the "control plane" (as defined in the CCITT recommendations), or user data between two or more of the terminals IT1-1T4 when the connections belong to the "user plane" (as defined in the CCITT recommendations). In the latter case, user data are either user information, e.g. speech or video signals belonging to a videophone call, or control information. In this connection, it is to be noted that the signalling data and the control information both constitute control signals. The difference is that the signalling data is exchanged between the terminals IT1/4 and the switching network DSN, whilst the control data is exchanged between two intelligent user terminals IT1/4 and allows the latter to communicate between each other as will be explained later. The switching network DSN is not concerned with this control information and handles it as ordinary user data.

The above digital telecommunication system offers the following classical user facilities:

- "transport services" which include for instance Value-Added- Services (e.g. mail handling) and media conversions (e.g. PAL/NTSC, FAX/Electronic mail, A-law and μ-law conversions) and manipulate the information transferred between two or more terminals IT1/4 on connections through the switching network DSN. They constitute the protocol layers supporting end- to- end communications between two terminals; and

- "control services" which manipulate the connections that are part of a call without modifying the information transferred thereon. They contain the signalling protocols involved in the control of events and operations occurring during transient call phases such as call setup and call release.

The following part of the description mainly concentrates on the control services, these services comprising two categories called basic control services and enhanced control services.

The basic control services involve basic operations which consist of establishing and releasing connections between the terminals IT1/4 and which are supervized by basic control means. Each of the latter is called instance TCSI of a telecommunication service TCS which is described later and is located in the intelligent user terminals IT1/4. Each TCSI has a peer entity in the digital switching network DSN for executing the basic operations.

The enhanced control services involve enhanced, i.e. other than basic, operations which make the telecommunication system more user friendly and which are controlled by dedicated control means. Each of the latter is called instance TCAI of a telecommunication application TCA also described later and exclusively located in the intelligent user terminals IT1/4. Examples of such enhanced operations are diversion, completion and third party services.

An example of a diversion service is for instance the "call forward telecommunication application" CF-TCA where a call from a first terminal IT1 to a second terminal IT2 is normally automatically rerouted or forwarded to a third terminal IT3, either immediately, i.e. without informing the second terminal IT2 about the call, or after a predetermined delay during which IT2 may intercept this call. This application CF-TCA will be described in more detail later.

The completion services may for instance be:
- a "busy user telecommunication application" where a call from a first terminal IT1 to a second terminal IT2 found "busy" is automatically retried by the first terminal IT1 upon the second terminal IT2 becoming free; or
- a "no reply telecommunication application" where a call from a first terminal IT1 to a second terminal IT2 not able to receive this call is retried by the first terminal IT1 upon authorization of the second terminal IT2.

An example of a third party service is a "remote execution telecommunication application" RE-TCA where telecommunication applications TCAs located in a second terminal IT2 may be used by a first terminal IT1 not provided with these applications. This application RE-TCA will also be described in more detail later.

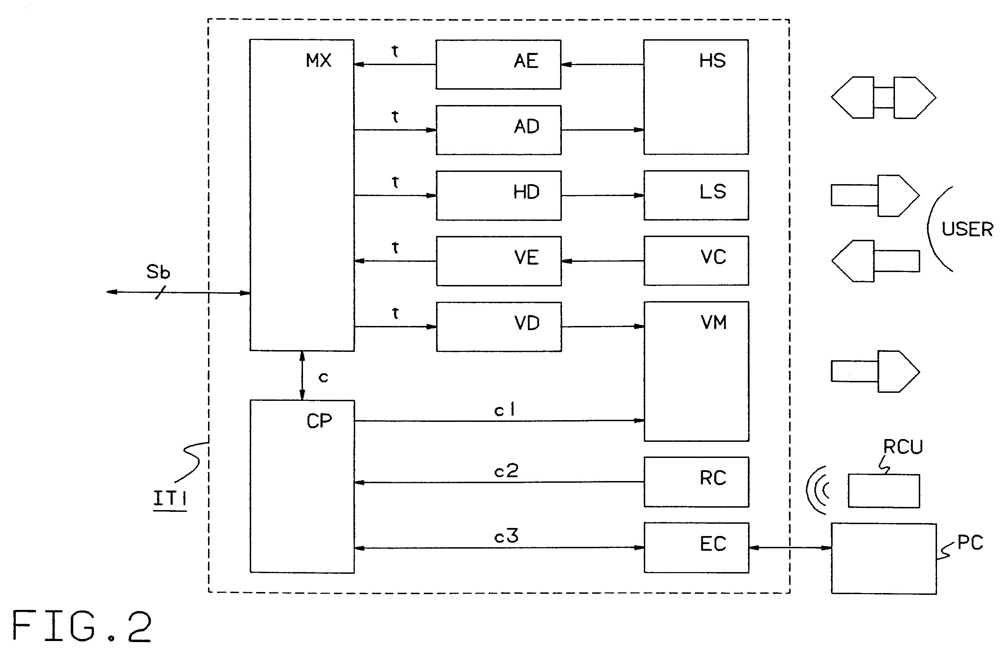

Reference is now made to Fig. 2 which shows terminal IT1 in more detail. The latter includes processor means CP wherein the above mentioned telecommunication services TCSs and applications TCAs are located, the latter being software programmes. The above instances TCSIs and TCAIs are copies (clones) of TCSs and TCAs respectively and are temporarily created in order to be used (run) in a particular control service, e.g. a videophone call.

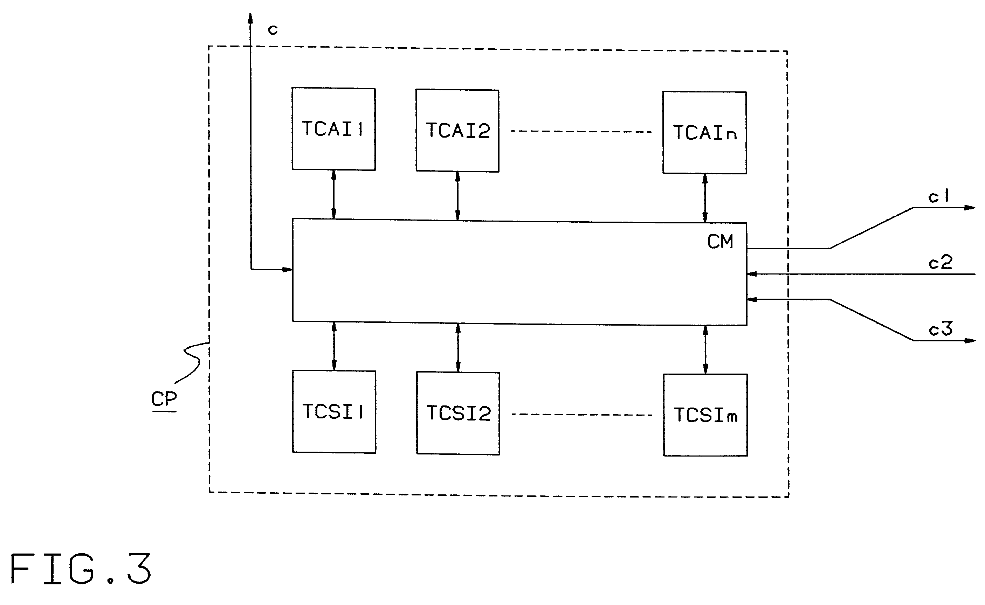

A functional configuration of the processor means CP is shown in Fig. 3. It includes a controller module CM under the supervision of which m telecommunication service instances TCSI1 to TCSIm and n telecommunication application instances TCAI1 to TCAIn may be created and run.

TCSI, TCAI and the user of the terminal IT1 are organized in three functional levels:
- a lowest level constituting the telecommunication service instances TCSIs. These provide the basic primitives to supervize a single call;
- an intermediate level constituting the telecommunication application instances TCAIs. They make use of the primitives offered by the telecommunication service instances TCSIs and provide an interface towards the user; and
- a highest level which is the user himself who invokes the telecommunication application instances TCAIs in order to control a call.

From the above it follows that in each terminal the telecommunication services TCSs are the lowest level logic building blocks of the processor means CP and that each instance TCSI thereof supervises the establishment/ release of user data connections, i.e. connections carrying user data. These telecommunication services TCSs are of three types:

- a "Videophone telecommunication service" V-TCS;
- a "TV Distribution telecommunication service" TVD-TCS; and
- a "control Bearer telecommunication service" B-TCS.

The telecommunication applications TCAs of each terminal are logic blocks built on top of the telecommunication services TCSs. They make use of the functionality offered by these telecommunication services TCSs and present to the user more powerful primitives than those provided by TCS.

A single telecommunication application instance TCAI is able to control one or more instances TCSIs of telecommunication services TCSs of the same or of different types. The TCAIs may differ in complexity. For instance, in a videophone call between two terminals a simple videophone telecommunication application instance V-TCAI controls a single videophone telecommunication service instance V-TCSI, whilst for managing a videophone conference without a conference manager in the switching network a more complex TCAI has to control an unpredictably varying number of videophone telecommunication service instances V-TCSI and control bearer telecommunication service instances B-TCSI.

The cooperation of the TCAIs and the TCSIs in a terminal is briefly explained in the examples given below.

When a videophone call has to be established, e.g. from a terminal IT1 at a location A (not shown) to a terminal IT2 at a location B (not shown), the user of IT1 triggers the controller module CM thereof to create a videophone telecommunication application instance V-TCAI-A1. As will be described later, the user can perform this operation by means of a remote control unit RCU associated to his terminal IT1. The latter V-TCAI-A1 creates in turn and under the supervision of CM a videophone telecommunication service instance V-TCSI-A1. More generally and from now on, the Nth instance of a telecommunication application/ service X in a terminal at a location Z, will be referred to as X-TCAI-ZN/ X-TCSI-ZN. V-TCSI-A1 then supervizes the establishment of three user data connections which are necessary for a videophone communication between the two terminals IT1 and IT2. These three user data connections will all carry user information and are constituted by two video connections, one for each direction, and one bidirectional speech connection. By this videophone call, a videophone telecommunication service instance V-TCSI-B1 is issued in the terminal IT2. This V-TCSI-B1 in turn creates a V-TCAI-B1 in IT2. Everything is then ready to start the videophone communication. This happens when the user of the terminal IT2 replies to a message sent by V-TCAI-B1 in order to inform this user that there is a videophone call for him. It is to be noted that this message includes also the references, e.g. the name, the number and/ or the location A, of the calling user, i.e the user of the terminal IT1.

Similarly, to obtain the display of a channel of a TV distribution in the terminal IT1, the user of IT1 issues a TV distribution telecommunication application instance TVD-TCAI-A1 which will couple him to a TV distribution service provider which may for instance be similar to an intelligent user terminal IT2 located at B. To this end and under the supervision of the controller module CM of IT1, TVD-TCAI-A1 creates a TV distribution telecommunication service instance TVD-TCSI-A1. As in the previous example TVD-TCSI-A1 supervizes the establishment of three user data connections which are necessary for receiving TV distribution. However in this case, only two of these three user data connections will carry user information, the remaining one carrying control information. The two connections carrying the user information are consituted by one video connection and one audio connection both from IT2 to IT1, whilst the connection carrying the control information is constituted by a control bearer connection from IT1 to IT2, this control bearer connection being for instance used for selecting a particular channel of the TV distribution. By this TV distribution call, a TV distribution telecommunication service instance TVD-TCSI-B1 is issued in the terminal IT2. This TVD-TCSI-B1 in turn creates a TVD-TCAI-B1 in IT2 and the terminal IT1 can thereby receive the requested TV channel from the TV distribution service provider.

As already mentioned, the user data connections through the digital switching network DSN are undistinctly used for transferring user information and control information. The latter is not used by the switching network DSN but only by the terminals IT1 and IT2 which communicate to each other thereby.

Finally, a control bearer telecommunication service instance B-TCSI-A1 in a terminal IT1 at a location A may be created by an instance TCAI of any telecommunication application TCA in this terminal IT1 in order to exchange control information with a peer control bearer telecommunication service instance B-TCSI-B1 in a terminal IT2 at a location B. This exchange however generally leads to the establishment of two user data connections, one for each direction, between the terminals IT1 and IT2. Both of these two user data connections then carry control information. A use of a control bearer telecommunication service B-TCS is described in the example of the call forward telecommunication application CF-TCA given later.

Referring again to Fig. 2, the intelligent user terminal IT1 includes in addition to the processor means CP:

- a multiplexer/ demultipler circuit MX;
- a low quality audio encoder AE;
- a low quality audio decoder AD;
- a high quality audio decoder HD;
- a Variable Bit Rate (VBR) video encoder VE;
- a Variable Bit Rate (VBR) video decoder VD;
- a telephone handset HS;
- high- quality audio speakers LS;
- a video camera VC;
- a video monitor VM;
- a remote control interface RC to which the above remote control unit RCU may be coupled; and
- an external communication interface EC for connecting a personal computer PC thereto.

The multiplexer/ demultipler circuit MX is connected to the digital switching network DSN via the broadband S interface Sb, to the audio and video encoders and decoders AE, AD, HD, VE, VD via distinct unidirectional internal transport links t carrying transport information, i.e. relating to the above transport services, and to the processor means CP via a bidirectional internal control link c carrying control information. MX operates under the supervision of the processor means CP and its purpose is to separate/ combine transport information and control information received from/ sent to the switching network DSN through the Sb interface.

The telephone handset HS is used for reproducing or generating low quality sound (speech), e.g. for a videophone call. HS is connected to MX via AE and AD as shown.

The audio speakers LS reproduce the high quality signal of a TV (or Audio) distribution. As shown, MX is connected to LS via HD.

The video camera VC is used for videophone calls and it is connected to MX via VE.

The video monitor VM is used both for displaying a video signal received, e.g., from a TV distribution application via DSN, and for interfacing between the user and the processor means CP. The latter interface is achieved by displaying on top of the live video signal, i.e. by overprinting it, windows of messages relating to one or more particular telecommunication application instances TCAIs. These messages may for instance inform the user of the progress of a telecommunication application instance TCAI or solicit input from this user via his remote control unit RCU. The video signal is transmitted to VM via MX and VD, whilst the signals corresponding to the messages arrive to VM via MX, CP and an internal control link c1.

The remote control unit RCU allows the user to start a call, e.g. to issue an instance V-TCAI-A1 of a videophone telecommunication application V-TCA as mentioned above, or to enter replies to the messages displayed in the windows on the video monitor VM, i.e. to communicate with a particular TCAI. The associated remote control interface RC is connected to CP via an internal control link c2.

The personal computer PC, which may be connected to the intelligent user terminal IT1 via the external communication interface EC which is itself connected to CP by a bidirectional internal control link c3, is used for operations and maintenance, e.g.:

- as interaction means between the user and a telecommunication application instance TCAI, in which case it takes over the functions of the remote control unit RCU and the messages or textual information are displayed on the PC's screen rather than on the video monitor VM;
- for adding new telecommunication applications TCAs into the terminal IT1 or for deleting existing ones, thereby modifying the intelligence of this terminal IT1;
- for monitoring purposes by displaying all the telecommunication service instances TCSIs which are invoked by a telecommunication application instance TCAI and which are normally not displayed on the video monitor VM;
- for changing adjustable internal parameters of the terminal IT1, thereby modifying the behaviour of the latter; and
- for communicating with another personal computer connected to another terminal via the digital switching network DSN.

From the above it follows that the intelligent user terminal IT1 physically resembles an ordinary remote controlled television set to which a video camera VC and a telephone handset HS have been added.

By locating the dedicated control means or telecommunication application instances TCAIs in the intelligent user terminals and by using these TCAIs as interface layer between the user and the telecommunication service instances TCSIs, it appears that any addition, deletion or modification of these TCAIs has no effect on the other parts of the telecommunication system. This is due to the fact that the basic control means, i.e. TCSIs and their peer entity in the switching network DSN, need not to be updated when the TCAIs are changed. Moreover, because the digital switching network DSN is not in charge of the enhanced operations, its management remain relatively simple.

Another advantage of locating the dedicated control means in the terminals IT1 is that the latter can be personalized for each user. In other words, each user may have in his terminal IT1 only the dedicated control means and thus the telecommunication applications TCAs he requires. The reduction of the number of TCAs or software programmes in a terminal results in a lower cost of the latter.

The following part of the description explains in more detail the above mentioned call forward telecommunication application CF-TCA where a calling party, say a user A (not shown), trying to reach a called party, say a user B (not shown), is finally connected (forwarded) to a third party, say a user C (not shown). The users A, B and C are located at like named locations (not shown), are referred to as forwarded user, forwarding user and forwarded_to user and operate on the intelligent user terminals IT1, IT2 and IT3 respectively.

A call forward(ing) telecommunication application instance CF-TCAI-B1 is first created by the user B in the terminal IT2. This instance CF-TCAI-B1 will handle all the incoming calls of the terminal IT2 and inform the calling party, e.g. the user A, that the user B is not able to answer the call and that the forwarded_to user is C at the terminal IT3. In this case, C and IT3 are the above references of the forwarded_to user.

When the user A then tries to establish a videophone call to the user B, he creates a videophone telecommunication application instance V-TCAI-A1 in his terminal IT1. This V-TCAI-A1 in turn issues a videophone telecommunication service instance V-TCSI-A1 which requires the digital switching network DSN to setup a videophone call to the terminal IT2. All these operations are supervized by the controller module CM of the terminal IT1 and the requirement is transmitted from IT1 to DSN via a signalling data connection, i.e. a connection carrying the above signalling data, of the latter.

When a signalling data connection is established between the terminals IT1 and IT2 via DSN, a videophone telecommunication service instance V-TCSI-B1 is created in the terminal IT2 by V-TCSI-A1. As a result of the existence of CF-TCAI-B1 and under the control of the controller module CM of IT2 no videophone telecommunication application instance V-TCAI-B1 is created by V-TCSI-B1, as it should be the normal procedure, but instead V-TCSI-B1 is coupled to the earlier created call forward(ing) telecommunication application instance CF-TCAI-B1.

CF-TCAI-B1 then creates a control bearer telecommunication service instance B-TCSI-B1 which leads to the establishment of control bearer connections to a peer control bearer telecommunication service instance B-TCSI-A1 created by B-TCSI-B1 in the terminal IT1. As already mentioned, these control bearer connections correspond to user data connections of the digital switching network DSN.

Also under the control of the controller module CM of IT1, B-TCSI-A1 creates in turn a call forward(ed) telecommunication application instance CF-TCAI-A1 in this terminal IT1.

CF-TCAI-B1 and CF-TCAI-A1 are now able to exchange control information via the existing control bearer connections between IT1 and IT2.

After having confirmed its creation to CF-TCAI-B1, CF-TCAI-A1 receives from the latter a message (control information) indicating that the videophone call associated to V-TCAI-A1 can not be handled by the terminal IT2 and that the references of the forwarded_to user are the location C and the terminal IT3.

CF-TCAI-B1 then releases V-TCSI-B1 and consequently V-TCSI-A1 and V-TCAI-A1 are also released. Then, CF-TCAI-A1 releases B-TCSI-A1 and B-TCSI-B1.

Under the control of the controller module CM of IT1, CF-TCAI-A1 then asks the user A if he accepts that his original call to the user B will now be forwarded to the user C.

Upon a positive answer of the user A and still under control of CM, CF-TCAI-A1 creates a new videophone telecommunication application instance V-TCAI-A2 which leads to the creation in series of a videophone telecommunication service instance V-TCSI-A2 in the terminal IT1, a videophone telecommunication service instance V-TCSI-C1 in the terminal IT3, and a videophone telecommunication application instance V-TCAI-C1 in this terminal IT3.

The videophone call from the user A to the user C is then setup.

It is to be noted that the call forward telecommunication application CF-TCA may lead to the creation of a cascade of forwarding, forwarded and forwarded_to users, e.g. if the user C had also issued a call forward(ing) telecommunication application- instance CF-TCAI-C1 to another user. This case was not considered in the above example. A drawback of having a cascade of forwarding users is that routing loops may appear, e.g. when the other user indicated by C is again the user B. To avoid the creation of routing loops, the call forward(ed) telecommunication application instance CF-TCAI-A1 keeps a history table wherein the references of all the forwarded_to users belonging to the same call are stored. CF-TCAI-A1 is then able to detect a routing loop by comparing the reference, e.g. the location, of a forwarded_to user received from the call forward telecommunication application instance CF-TCAI of a forwarding terminal with all the locations already stored in the history table. If the location received corresponds to one of the locations stored in the table, a routing loop is detected.

In a variant of the call forward telecommunication application CF-TCA, the instance CF-TCAI-B1 informs the user B that there is an incoming call from the terminal IT1. This information is available only for a predetermined period of time during which the user B may accept (intercept) the call. If there is no reaction from this user B at the end of the time period, the incoming call is rerouted to the user C as programmed in CF-TCAI-B1.

Also another additional use of CF-TCAI-B1 is to record all the incoming calls at the terminal IT2 so that the user B may consult this list of recorded calls at any moment.

The above mentioned remote execution telecommunication application RE-TCA is explained in more detail below.

RE-TCA is a generic telecommunication application which enables a user A of a terminal IT1 to execute an arbitrary telecommunication application TCA which is located in another terminal IT2.

In this example, the arbitrary telecommunication application TCA is a the videophone telecommunication application V-TCA. In more detail, both the terminals IT1 and IT2 are provided with the remote execution telecommunication application RE-TCA but only terminal IT2 is provided with the videophone telecommunication application V-TCA. The user A may however setup a videophone call to a user C of a third terminal IT3 in the following way.

By trying to setup a videophone call to the user C, the user A first creates a remote execution telecommunication application instance RE-TCAI-A1 in his terminal IT1.

RE-TCAI-A1 in turn issues a control bearer telecommunication service instance B-TCSI-A1 in IT1 which creates a peer control bearer telecommunication service instance B-TCSI-B1 in the terminal IT2.

Finally, B-TCSI-B1 creates a remote execution telecommunication application instance RE-TCAI-B1 in IT2.

Owing to the control information exchanged between RE-TCAI-A1 and RE-TCAI-B1 via the then established two control bearer connections between IT1 and IT2, the user A is able to finally issue a videophone telecommunication application instance V-TCAI-B1 in the terminal IT2.

In turn, V-TCAI-B1 creates, via RE-TCAI-B1 and RE-TCAI-A1, a videophone telecommunication service instance V-TCSI-A1 in the terminal IT1 of the user A.

From V-TCSI-A1, the videophone call is further setup to the user C as described before.

It is to be noted that the messages sent from RE-TCAI-B1 to RE-TCAI-A1 include instructions (basic primitives) which have to be executed in the terminal IT1 by V-TCSI-A1 or which have to be sent to the user (display), whilst the messages sent from RE-TCAI-A1 to RE-TCAI-B1 include indications from V-TCSI-A1 about the progression of the videophone call or replies from the user.

It is also to be noted that all the operations performed in the terminals IT1 and IT2 are controlled by the controller modules CM of these terminals IT1 and IT2 respectively.

More generally, the remote application telecommunication application RE-TCA allows the user of an intelligent user terminal IT1 to call a commercial server which rents some of the above telecommunication applications TCAs which are not available in the terminal IT1. It is indeed generally known that the renting of telecommunication applications TCAs or software programmes which are not often used come cheaper than buying these programmes and installing them in the user's terminal IT1.

Many other dedicated control means or telecommunication application instances TCAIs, each corresponding to a particular combination of the telecommunication service instances TCSIs or of other dedicated control means may be implemented in the intelligent user terminals IT1 in order to make the latter more user friendly. It is therefore to be clearly understood that this description is made only by way of example and not as a limitation on the scope of the invention.

## Claims

1. Digital telecommunication system including a digital switching network (DSN), a plurality of user terminals (IT1-4) coupled to said switching network, and control means (TCSI, TCAI) for performing basic and enhanced operations, said basic operations consisting of establishing and releasing user data connections between said user terminals (IT1-4) and said enhanced operations being different from said basic operations, characterized in that said enhanced operations are controlled by dedicated control means (TCAI) exclusively located in said user terminals (IT1-4).

2. Digital telecommunication system according to claim 1, characterized in that said basic operations consist of establishing/ releasing a plurality of said user data connections between at least two of said user terminals (IT1-4).

3. Digital telecommunication system according to claim 2, characterized in that said user data connections transmit either user information or control information between said user terminals (IT1-4).

4. Digital telecommunication system according to claim 3, characterized in that at least one of said user data connections is used to transfer said user information, whilst at least another one of said user data connections is used to transfer said control information between said user terminals (IT1-4).

5. Digital telecommunication system according to claim 1, characterized in that said user data connections link dedicated control means (TCAI) of a first user terminal (IT1) with dedicated control means (TCAI) of a second user terminal (IT2).

6. Digital telecommunication system according to claim 1, characterized in that said digital switching network (DSN) is a Broadband Integrated Services Digital Network (B-ISDN).

7. Digital telecommunication system according to the claim 1, characterized in that said user data connections transmit data according to the Asynchronous Transfer Mode (ATM) switching technique.

8. Digital telecommunication system according to claim 1, characterized in that one of said enhanced operations is a remote execution operation which consists of using by a first terminal (IT1) dedicated control means (TCAI) located in a second terminal (IT2), each of said first and second terminals including a remote execution dedicated control means (RE-TCAI) for performing said remote execution operation.

9. Digital telecommunication system according to claim 1, characterized in that one of said enhanced operations is a call forward operation which consists of rerouting a call from a calling terminal (IT1) to a second terminal (IT2) towards a third terminal (IT3), each of said calling and second terminals including a call forward dedicated control means (CF-TCAI) for performing said call forward operation.

10. Method for performing a call forward operation (CF-TCAI) which consists of rerouting a call from a calling terminal (IT1) to a second terminal (IT2) towards a third terminal (IT3), characterized in that said method includes:
    - a first step of activating in said second terminal (IT2) first call forward control means (CF-TCAI-B1) for indicating to any incoming call that the latter has to be rerouted to said third terminal (IT3);
    - a second step of handling each call arriving in said second terminal (IT2) by said first call forward control means which activates second call forward control means (CF-TCAI-A1) in said calling terminal (IT1) and transfers references of said third terminal thereto; and
    - a third step of calling said third terminal by said second call forward control means.

11. Method according to claim 10, characterized in that said second call forward control means (CF-TCAI-A1) informs the user (A) of said calling terminal (IT1) of the rerouting and provides said references to said user.

12. Method according to claim 11, characterized in that said third step is executed upon authorization of said user (A) of said calling terminal (IT1).

13. Method according to claim 10, characterized in that another said first call forward control means (CF-TCAI-B1) is activated in said third terminal (IT3) in order to further reroute said call from said calling terminal (IT1) towards a fourth terminal.

14. Method according to claim 13, characterized in that said second call forward control means (CF-TCAI-A1) keeps a history table of said references given by the first call forward control means (CF-TCAI-B1) of the rerouting terminals (IT2, IT3) associated with a same call in order to detect routing loops.

FIG. I

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PROCEEDINGS OF THE NATIONAL COMMUNICATIONS FORUM, vol. 40, part II, 1986, pages 657-663, Oak Brook, Illinois, US; D.J. EIGEN: "Switching systems role in network evolution" * Page 659, left-hand column, line 14 - right-hand column, line 44; figures * | 1,2,9 | H 04 Q   11/04 H 04 M    3/54 |
| A | IEEE INFOCOM'88, CONFERENCE ON COMPUTER COMMUNICATIONS, 7TH ANNUAL JOINT CONFERENCE OF THE IEEE COMPUTER AND COMMUNICATIONS SOCIETIES, New Orleans, 27th - 31st March 1988, pages 3A1.1 - 3A.1.4, US; A.M. ALI: "On the user network interface in broadband-ISDN" * Pages 3A.1. - 3A.1.3 * | 1,2,6,7 | |
| A | INTERNATIONAL SWITCHING SYMPOSIUM 1990, "Innovations in switching Technology", Stockholm, 28th May - 1st June 1990, vol. 6, session A9, paper 1, pages 1-4; B. MOBASSER: "Service and resource identification in B-ISDN" * Pages 1,2 * | 1,2,6,7 | TECHNICAL FIELDS SEARCHED (Int. Cl.5) H 04 Q H 04 M |
| A | IEEE INTERNATIONAL CONFERENCE ON COMMUNICATIONS, Boston, MA, 11th - 14th June 1989, vol. 3, pages 39.6.1-39.6.5; Y. SAKITA et al.: "A study on exchange functions and cross-connect functions on communication network" * Page 39.6.2, right-hand column, line 43 - page 39.6.5, right-hand column, line 4; figures * | 1,2,6,7 ,9 | |

-/-

The present search report has been drawn up for all claims

| Place of search | Date of completion of the search | Examiner |
|---|---|---|
| THE HAGUE | 01-08-1991 | DELANGUE P.C.J.G. |

EPO FORM 1503 03.82 (P0401)

European Patent
Office

EUROPEAN SEARCH REPORT

Application Number

EP  90 87 0236

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | TELEMATICA, INTERNATIONALER FACHKONGRESS FÜR INTEGRIERTE TELEKOMMUNIKATION, TELEMATIK, KABEL- UND SATELLITENKOMMUNIKATION, Kongressband 1988, pages 184-192; J. KANZOW: "Das Berliner BERKOM-Projekt" * Page 185, line 17 - page 188, line 22; figures * | 1,2,6 | |
| A | EP-A-0 238 255 (ATT) *.Page 4, line 10 - page 9, line 3; figures 1,2; abstr. * | 1 | |
| A | EP-A-0 365 200 (ATT) * Column 3, line 5 - column 7, line 55; figures * | 1,9,10 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 01-08-1991 | DELANGUE P.C.J.G. |